# EUROPÄISCHE PATENTSCHRIFT

(11) **EP 0 996 863 B1**
(45) Veröffentlichungstag und Bekanntmachung des Hinweises auf die Patenterteilung: **09.08.2006**
(21) Anmeldenummer: 99924898.2
(22) Anmeldetag: 06.05.1999
(51) Int. Cl.: G02B 21/02

(54) **ANORDNUNG ZUR DIREKTEN STEUERUNG DER BEWEGUNG EINES ZOOMSYSTEMS IN EINEM STEREOMIKROSKOP**
SYSTEM FOR DIRECTLY CONTROLLING THE MOVEMENT OF A ZOOM SYSTEM IN A STEREOMICROSCOPE
AGENCEMENT POUR LA COMMANDE DIRECTE DU DEPLACEMENT D'UN SYSTEME DE ZOOM DANS UN STEREOMICROSCOPE

(30) Priorität: 18.05.1998 DE 19822256
(43) Veröffentlichungstag der Anmeldung: 03.05.2000
(73) Patentinhaber: CARL ZEISS JENA GmbH, 07745 Jena (DE)
(72) Erfinder: TANDLER, Hans, D-07745 Jena (DE); KNOBLICH, Johannes, D-07747 Jena (DE); DÖRING, Gerhard, D-07646 Schlöben (DE)
(86) Internationale Anmeldenummer: PCT/EP1999/003133
(87) Internationale Veröffentlichungsnummer: WO 1999/060436

(56) Entgegenhaltungen:
- DE-A- 4 315 630
- DE-A- 19 541 237
- US-A- 5 258 798
- US-A- 5 661 598

## Beschreibung

### 1. Stand der Technik:

Stereomikroskope mit Varioobjektiven (DE 4315630 C2) werden zunehmend als Beobachtungsinstrumente bei Manipulations- und Kontrollaufgaben eingesetzt , bei denen der Anwender in beiden Händen Instrumente hält.
Eine Motorisierung der Bedienfunktionen "Zoomen" und "Fokussieren" und die Bedienung z. B. über Fußschalter bzw. ergonomisch angebrachte Bedienelemente stellt hierbei eine deutliche Arbeitserleichterung für den Anwender dar. Die Bedienfunktionen "Zoomen" und "Fokussieren" sind beispielsweise bei modernen Operationsmikroskopen, die von ihrem optischen Prinzip her auch Stereomikroskope sind, grundsätzlich motorisiert und die Steuerung wird vorwiegend über einen Fußschalter durchgeführt.

Zu dem oben beschriebenen Problemkreis der motorisch bewegten optischen Elemente, Zoom- oder Fokussiersystemen bzw. motorischen Antriebselemente sind bereits eine ganze Reihe verschiedenartiger Lösungsvorschläge bekannt.

In der Patentschrift "Optical instrument" US 5,661,598 (NIKON) wird ein voll motorisiertes optisches Instrument (Ausführungsbeispiel: Operationsmikroskop in Teleskopbauweise) beschrieben, in dem das Zoomsystem, das Fokussiersystem (z - Richtung) und am Stativ die instrumentenbewegungen in x - und y - Richtung durch einzelne Motorantriebe bewegt werden. Die Steuerung aller Antriebe wird über sog. Okularschalter realisiert, d. h. entsprechende Augenbewegungen werden über eine an den Okularen angebrachte Sensorik und eine Steuersoftware in Steuersignale für die Antriebe umgesetzt.

In der Patentschrift "Elektrodynamischer Aktuator für optische Speichersysteme" DE 3808510 (C1) wird der Aufbau eines elektrodynamischen Antriebes zur Bewegung von optischen Einheiten beschrieben; ein Steuerprinzip für optische Zoomsysteme ist nicht Gegenstand der Patentschrift.

In der Patentschrift "Selbstkalibrierendes Aktuatorpositionskontrollsystem, insbesondere für Kameraverschlüsse, Irisbfendensteuerungen, Zoomobjektivbetätigungen u. ä." EP 0744650 A2 961127 (KODAK) wird ein optischer Sensor beschrieben, dessen Steuersignal zur Selbstkalibrierung von mittels elektrischer Antriebe bewegter optisch - mechanischer Funktionseinheiten - beispielsweise von Kameras - benutzt wird.

In der Patentschrift "Displacement measurement apparatus having first and second servo control circuits and a zone decision circuit" EP 0646769 A1 950405 (SONY) wird eine Anordnung und Verfahren zur optischen Fokussteuerung beschrieben, bei der u. a. eine Objektivlinse mittels elektrischem Linearantrieb verschoben wird.

In der Patentschrift "Objektivlinsenantriebsvorrichtung für einen optischen Aufnehmer" DE 4224824 (A1) (SAMSUNG) wird eine Anordnung zum Objektivlinsenantrieb und zur elastischen Lagerung der Antriebseinrichtung beschrieben.

In der Patentschrift "Camera" US 5258798 (MINOLTA) wird ein mit Linearmotor angetriebenes Kamera - Zoomsystem (einkanalig) beschrieben.

Stellvertretend für eine ganze Reihe von Patentanmeldungen werden beispielsweise in den Patentschriften "Apparatus for moving an optical system" US 5187702 (TOSHIBA) oder "Thin type optical head" US 5623372 (NEC Corporation) oder "Magneto-optical recording apparatus that compensates for magnetic fields leaking from an objective lens actuator and a linear motor" US 5563853 (CANON) verschiedenartige Grundprinzipien von über Linearantriebe bewegten optische Systeme zum Lesen von CD oder OCD beschrieben.

In der Patentschrift "Lineare Verstelleinheit für Autofocussysteme" DE 296 02 202 U1 wird für ein Autofocus - Projektionssystem eine Bildvorlage über ein Projektionsobjektiv auf eine Bildfläche abgebildet, indem zur Scharfstellung der Abbildung das Objektiv in Achsrichtung beweglich in einem Objektivhalter gelagert und die Bewegung in Achsrichtung durch eine Antriebseinheit (Linearantrieb) elektromechanisch geregelt wird.

In der Patentschrift "Inner focus type zoom lens driving mechanism" US 5612740 wird für die Anwendung in einer CCD - Kamera ein mit Linearantrieb ausgestattetes Zoomsystem beschrieben.

In der Patentschrift "Motor and an optical apparatus having such motor" US 5,365,296 (CANON) wird der Aufbau und die Funktionsweise spezieller piezoelektrischer Linearantriebe für den Antrieb von Zoom- und Autofocus - Systemen einschließlich der gesamten Steuerung aller Funktionsparameter einer automatischen CCD - Kamera (Camcorder) beschrieben.

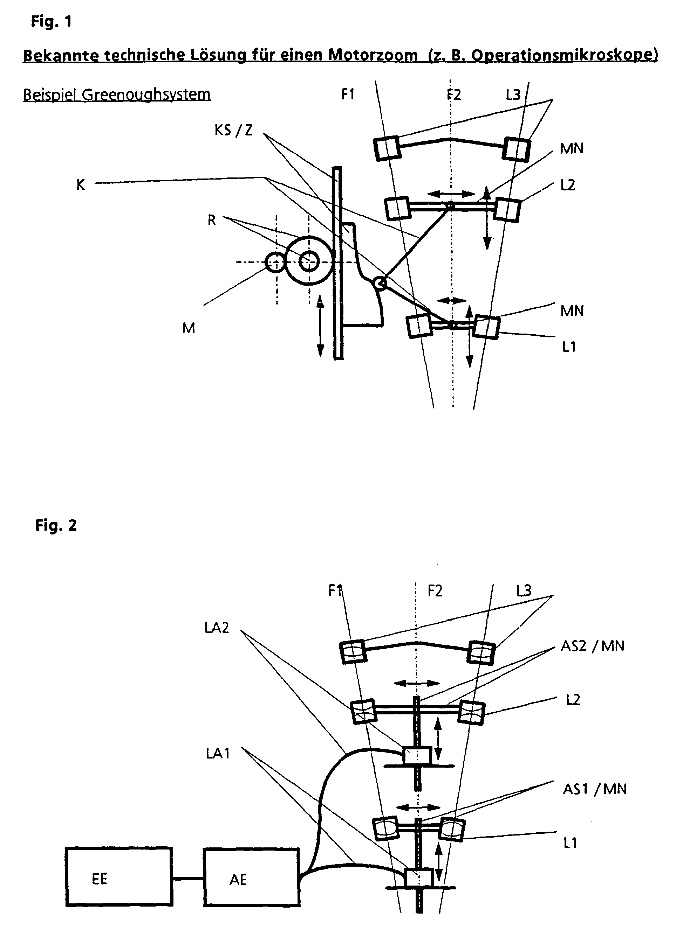

Die bekannten Lösungen eines motorisierten Zoomtriebes beispielsweise bei Operationsmikroskopen gehen davon aus, daß die mathematischen Kurven zur Steuerung der optischen Zoomglieder mit mechanischen Mitteln (z. B. zweidimensionale Kurvenscheibe + Kniehebelantastung oder dreidimensionale Kurve, einer sog. "Topfkurve") erzeugt werden und der Motorantrieb dieser nach der mechanischen Kurve gesteuerten optischen Glieder nur anstelle des mechanischen Bedienelementes (Zoomknopf) angekoppelt wird (z. B. über Zahnstange - Ritzel).
Eine derartige Lösung ist in Fig.1 dargestellt.
Sie ist aufwendig und teuer, weil die mechanische Steuerung erhalten bleibt und der Motor lediglich als Antriebselement fungiert.

Eine motorische Positionierung der optischen Zoomglieder mittels Positionsregelkreisen ist aus der DE 195 41 237 A1 bekannt.

Die Patentschrift GB 1 532 576 offenbart eine Steuereinrichtung für Objektive mit veränderbarer Brennweite.

Aufgabe der Erfindung ist ein einfacherer und kostengünstigerer Zoomantrieb für ein Stereomikroskop.

Die Aufgabe wird erfindungsgemäß durch die Merkmale des Anspruchs 1 gelöst. Bevorzugte Weiterbildungen der Erfindung sind Gegenstand der abhängigen Ansprüche.

Die Erfindung geht davon aus, auf eine Erzeugung der Steuerkurven der stereomikroskopischen Zoomsysteme mit mechanischen Mitteln vollständig zu verzichten (Einsparung von Kurvenscheiben und einer Reihe von mechanischen Übertragungselementen) und die optischen Elemente mit elektrischen Direktantrieben (z. B. Aktuatoren oder sog. "Stepper" als Linearantriebe mit entsprechender Schrittauflösung) anzusteuern.
Die aus der Optikberechnung vorliegenden Stützstellen der mathematischen Steuerkurve des stereomikroskopischen Zoomsystems stehen als programmierte Werte in Speicherelementen (z. B. EPROM oder PC - Speichermedien).
Beim Betätigen des elektrischen Zoom - Bedienelementes (Wippschalter oder Fußschalter mit Vorwärts- und Rückwärts - Steuerfunktion und zusätzlicher "Gas" - Funktion, d. h. Steuerung des Zoomtriebes mit verschiedenen Geschwindigkeiten) werden die Linearantriebe (bei beispielsweise zwei anzutreibenden optischen Gliedern) gleichzeitig angesteuert und legen pro Zeiteinheit je nach mathematischer Kurve eine unterschiedliche Anzahl von Einzelschritten zurück. Damit erreichen die bewegten optischen Glieder in diskreten Einzelschritten , die je nach gewünschter Zoomauflösung kleiner oder größer sein können, ihre nach optischer Rechnung (Datenblatt) einzustellenden Sollpositionen.

Ein weiterer Vorteil dieses Lösungsansatzes besteht darin, daß die optische Justierung über die Linearantriebe erfolgen kann, d. h. die vorgegebene mathematische Sollkurve, die im Speicher vorliegt, kann im Einzelschrittbetrieb während der optischen Systemjustierung geändert werden.
Hierzu wird der Zoombereich durchgefahren und überprüft, ob eine mögliche Fokussierabweichung noch innerhalb des Tiefenschärfenbereiches liegt.
Dies kann durch subjektive Bildbeurteilung, aber auch durch objektive Messung, beispielsweise über eine angeschlossene CCD - Kamera im Abbildungsstrahlengang über Kontrastmessung an einem Testobjekt erfolgen.
Falls eine Fokussierabweichung festgestellt wird, werden die Verstellwerte der Antiebsmotoren so geändert (automatisch oder als manuell ausgeführte Korrektur), daß diese beseitigt wird und der neue Einstellwert des / der Antriebe wird abgespeichert (Korrektur des "Apparatefehlers").

Eine derartige Nacheinstellung ist bei herkömmlichen Kurvenantrieben wie in Fig. 1 dargestellt, nicht oder nur eingeschränkt möglich.

Die mathematische Sollkurve liegt auf einem externen Rechner (PC) vor, die Korrektur wird dann über den externen Rechner, der für die werksseitige Systemprogrammierung benutzt wird, durchgeführt. Nach erfolgter Programmierung (Korrektur des optischen "Apparatefehlers") vom externen PC aus erfolgt dann die Programmierung eines EPROM's (Speicher - Schaltkreis) mit dem korrigierten Programm (korrigierte Funktionswert - Wertepaare). Dieser EPROM wird anschließend in das Stereomikroskop eingesetzt.

Die Erfindung wird nachstehend anhand von schematischen Zeichnungen näher erläutert.

Es zeigen:
- Fig. 1 :: Ein Zoomsystem nach dem Stand der Technik
- Fig. 2:: Ein erfindungsgemäßes Zoomsystem
- Fig. 3:: Eine weitere Ausführung mit gekoppelten Linsenpaaren
- Fig. 4:: Ein motorisch angetriebenes Stereomikroskop.
- Fig. 5:: Die Wechselwirkung von Ansteuerung und Antrieben.

In Fig.1 ist ein Zoomantrieb für ein Stereomikroskop vom Greenough - Typ schematisch dargestellt.
Auf Führungen F1, F2 sind Linsenpaare L1, L2, L3 für die beiden Beobachtungsstrahlengänge angeordnet.
Linsengruppe L3 ist hier feststehend, L1 und L2 verschiebbar ausgebildet.
An Mitnehmern MN an den Linsenpaaren L1, L2 ist ein Kniehebel K befestigt, der über eine Rolle an einer Kurvenscheibe KS angelenkt ist.
Die Kurvenscheibe KS ist mit einer Zahnstange Z verbunden, die über ein Antriebsritzel R und einen Antriebsmotor M verstellt wird, d. h. über die rotatorische Motorbewegung wird über die Ritzel - Zahnstangen - Kombination die angekoppelte Kurvenscheibe linear angetrieben.
Durch die Kurvenform der Kurvenscheibe KS wird die Bewegung des Kniehebels K und damit die Verstellbewegung der Linsenpaare L1, L2 (nichtlineare mathematische Funktion) gesteuert.

Eine erste erfindungsgemäße Ausführung ist in Fig. 2 schematisch dargestellt.
Hier sind mit den Mitnehmern MN der Linsenpaare L1, L2 jeweils Antriebsspindeln AS1, AS2 verbunden, die von ortsfest in Lagerungen angeordneten motorischen Linearantrieben LA1, LA2, die sich innerhalb stereomikroskopischen Zoomsystems befinden, einzeln angesteuert werden.
Die Linearantriebe LA1, LA2 sind mit einer Ansteuereinheit AE verbunden, die ihrerseits mit einer Eingabeeinheit EE verbunden ist.

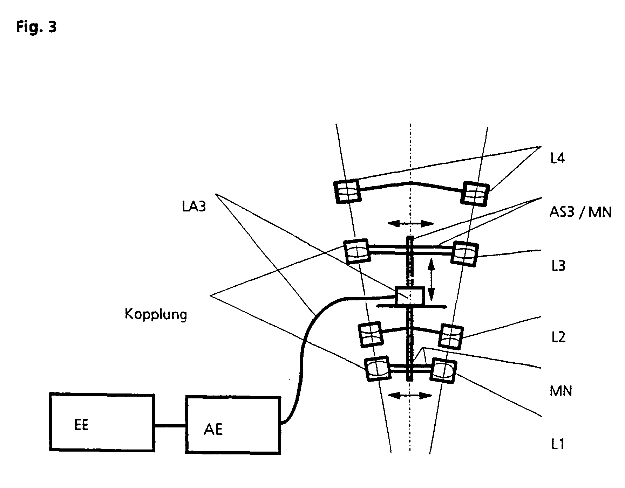

Eine weitere, in Fig. 3 dargestellte, Alternative für ein Stereomikroskop - Motorzoom mit Direktantrieb ergibt sich bei Stereomikroskopen mit optischem Ausgleich (Stereomikroskope in Greenough- oder Teleskopbauweise). Da bei dieser bekannten Bauform mit optischem Ausgleich (Beispiel aus dem CZ - Programm: Stemi 1000) zwei bewegliche Linsengruppen über eine gemeinsame Antriebsspindel starr miteinander verbunden und linear - d. h. ohne Kurvensteuerung - über den Zoomtrieb (Zahnstange - Ritzel - Zoomknopf) manuell angetrieben werden, ist für die Motorisierung auch nur ein einziger Linearantrieb notwendig. Im gezeigten Ausführungsbeispiel (s. Fig. 3) werden die gemeinsam zu bewegenden Linsengruppen L1 und L3 direkt über eine durchgehende Antriebsspindel AS3 miteinander gekoppelt (Spielausgleich z. B. über Zugfeder) und von dem feststehenden Linearantrieb LA3 ("Wagenheberprinzip") bewegt.
Hier besteht das Zoomsystem außerdem aus feststehenden Linsengruppen L2, L4, wobei L2 zwischen L1 und L3 angeordnet ist.
Die Systemjustierung kann im Gegensatz zu Stereomikroskopen mit Motorzoom und mechanischem Ausgleich hier nicht über den Linearantrieb erfolgen (Durchführung der mechanisch - optischen Justierung), da hier keine Relativbewegungen zwischen den separat stellbaren Linsengruppen justierbar sind (starre Kopplung der beweglichen Linsengruppen).

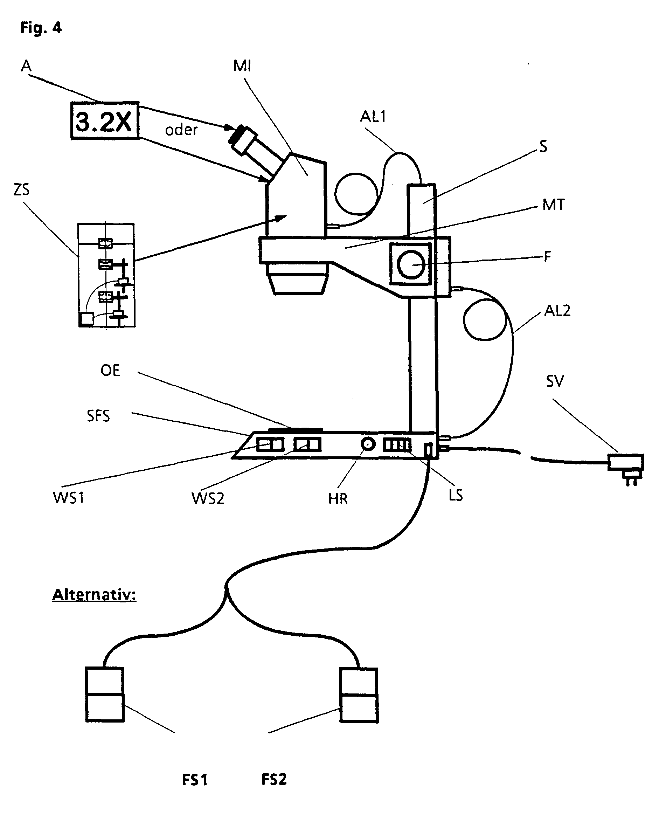

Fig. 4 zeigt eine schematische Gesamtdarstellung eines Stereomikroskops mit den erfindungsgemäßen Zoomantrieb sowie weiteren motorisch gesteuerten Funktionen. Es besteht aus einem Stativ S, an dem ein Mikroskopträger MT motorisch über einen motorischen Fokusantrieb F vertikal verstellbar angebracht ist.

Am Mikroskopträger MT ist das Stereomikroskop Ml befestigt. Im Gehäuse des Mikroskops Ml befindet sich, wie schematisch angedeutet, ein erfindungsgemäß angesteuertes motorisch betriebenes Zoomsystem ZS, wie es in Fig.2 und 3 beispielhaft dargestellt ist.
Der erfindungsgemäße Zoomantrieb kann beispielsweise über eine elektrische Versorgung AL1 angesteuert werden, die durch die Stativsäule geführt ist und in das Mikroskop Ml eingesteckt wird.
Eine weitere Versorgungsleitung AL2 verbindet den motorischen Fokusantieb F mit dem Stativ S.
Im Stativfuß SFS, auf dem sich die Objektebene OE (Einlegeplatte) befindet, können Wippschalter WS1, WS2 für Zoom und Fokus sowie weiterhin Helligkeitsregler HR sowie Lampenumschalter LS vorgesehen sein.

Die Stromversorgung SV von Stereomikroskopen mit Motorzoom kann wie dargestellt extern erfolgen, z. B. mit einem Weitspannungs - Steckernetzteil (Hersteller z. B. Fa. FRIWO, Steckernetzteil 90 V... 240 V / 12 V / 10 W oder 30 W) für einen mobilen Einsatz des Stereomikroskops ist ein möglicher Akkubetrieb vorteilhaft (Nutzung vorhandener, international genormter Akkus (wiederaufladbar), z. B. Camcorder - oder Elektroschrauber - Akkus).

Da beim Motorzoom eine mechanische Anzeige des Zoomfaktors nicht möglich ist, könnte die Anzeige vorteilhaft über eine LED - oder LCD - Anzeige A (Verwendung standardisierter mehrstelliger Einzeldot - Bauelemente) am Mikroskopträger MT er folgen (gute Sichtbarkeit bei minimaler Kopfbewegung z. B. bei Anbringung zwischen den Okularstutzen). Der anzuzeigende Abbildungsmaßstab kann aus den im EPROM vorliegenden Wertepaaren z = z(β) abgelesen und bei Nutzung einer 4 - stelligen Anzeige mit einer Auflösung von beispielsweise Δ β = 0.1× angezeigt werden (Anzeigebereich z. B. für DV4: ⇑0.8x ... ⇓3.2x in Schritten von 0.1x). Nach dem Einschalten des Stereomikroskops durchlaufen Steuerelektronik und Linearantriebe eine Initialisierungsphase, um die Nullpunkte der Linearantriebe zu finden und beispielsweise den Zoomtrieb auf den niedrigsten Abbildungsmaßstab (Übersichtsvergröße-rung) zu fahren. Ggf. könnten über die Anzeige auch noch andere Betriebszustände des Systems (z. B. Initialisierung, zusätzliche Fokusinformationen) angezeigt werden.

Bei einer alternativen Anzeige des Abbildungsmaßstabes und weiterer Betriebszustände im (nicht dargestellten) Okularzwischenbild (Integration von Miniatur - LED's in das Okular - Zwischenbild unter minimaler Einschränkung des Sehfeldes, externe Versorgung der Okularanzeige über Kabel vom Stereomikroskop - Grundkörper aus, ähnlich dem in CZ - Fertigung befindlichen Okularen mit beleuchteter Strichplatte mit statischem Bild oder ähnlich dem LED - Beleuchtungsprinzip zur Dateneinbelichtung bei Fotokameras) braucht der Beobachter zur Kontrolle von Betriebsparametern (z. B. des Abbildungsmaßstabes) die Okularbeobachtung nicht zu unterbrechen (erheblicher Vorteil bei Manipulationsaufgaben). Eine andere technische Lösung ist die Anzeige von Daten in der Okular - Zwischenbildebene über eine transparente, planparallele LCD - Matrix über das gesamte Sehfeld.

Ein erheblicher Vorteil bei Manipulationsaufgaben an Stereomikroskopen stellt die Kombination von Motorzoom und Motorfokus dar (Prinzip Operationsmikroskop). Bei der Verwendung des Motorfokus F am Fokussiertrieb des Stereomikroskopträgers geht es nicht um den Einsatz eines Autofocus - Systems (z. T. große Tiefenausdehnung der stereoskopischen Objekte um ein Vielfaches der Tiefenschärfe), sondern lediglich um die Motorisierung und Fernbedienbarkeit (z. B. auch mit über Fußschalter FS1, FS2 für Zoom und Fokus) dieser Bedienfunktion bei Manipulationsaufgaben.

Technisch gibt es eine ganze Reihe bekannter, verschiedenartiger Lösungsansätze für manuell steuerbare Motor - Fokussiersysteme für die Mikroskopie allgemein und auch für die Stereomikroskopie (vorwiegend Operationsmikroskope) im besonderen. Die für den Anwender sehr sinnvolle Kombination von dem erfindungsgemäßen Stereomikroskop - Motorzoom mit dem als bekannter Stand der Technik vorliegende Stereomikroskop - Motorfokus (im Grundgerät integrierte Motorfokus - Systeme oder am Stereomikroskop - Träger ansetzbare "Rucksack" - Lösungen) kann als ein Unteranspruch genannt werden.

Das vollmotorisierte Stereomikroskop entsprechend Fig. 4 stellt die Kombination der o. g. motorisierten Bedienfunktionen Motorzoom, Motorfokus und motorisiertes Vorsatzsystem (variable Einstellung der Objektschnittweite) dar.

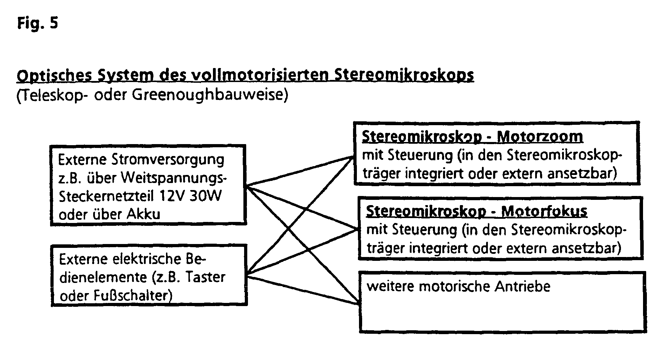

Fig. 5 zeigt schematisch die Wechselwirkung zwischen den Antrieben für das Zoomsystem und den Fokus einschließlich ihrer Steuerungen und der Stromversorgung sowie den zugeordneten Bedienelementen.
Bedienelemente sowie Ansteuerung können auch über einen PC und eine Benutzeroberfläche auf dessen Bildschirm betrieben werden.

## Patentansprüche

1. Stereomikroskop mit einer Anordnung zur direkten Steuerung des Zoomantriebs des Stereomikroskops mit mindestens zwei bewegbaren Linsengruppen(L1, L2), bestehend aus direkten motorischen Antrieben (LA1, LA2) für die mindestens zwei bewegten Linsengruppen (L1, L2), wobei die Antriebe (LA1, LA2) durch eine Ansteuereinheit (AE) angesteuert werden, die vorgespeicherte Werte für die Bewegung der Linsenglieder (L1, L2) ausliest und entsprechend die Antriebe (LA1, LA2) gleichzeitig so ansteuert, dass pro Zeiteinheit je nach mathematischer Steuerkurve eine unterschiedliche Anzahl von Einzelschritten zurückgelegt wird.

2. Anordnung nach mindestens einem der vorangehenden Ansprüche, wobei Linsenglieder als Linsenpaare in einem Greenough- Stereomikroskop oder Teleskop- Stereomikroskop vorgesehen sind.

3. Anordnung nach mindestens einem der vorangehenden Ansprüche, wobei die Antriebe Linearantriebe sind.

4. Anordnung nach Anspruch 4, wobei die Linearantriebe im Stereomikroskopgehäuse angeordnet sind.

5. Anordnung nach Anspruch 5, wobei die Antriebe zwischen den Linsenpaaren angeordnet sind.

6. Anordnung nach mindestens einem der vorangehenden Ansprüche, wobei eine gemeinsame Ansteuerung mehrerer bewegter Linsenglieder erfolgt.

7. Anordnung nach mindestens einem der vorangehenden Ansprüche, wobei ein getrennter Antrieb mindestens zweier Linsenglieder erfolgt.

8. Anordnung nach mindestens einem der vorangehenden Ansprüche, wobei während der Ansteuerung des Zoomantriebs der jeweilige eingestellte Abbildungsmaßstab bestimmt und dem Operateur angezeigt wird.

9. Anordnung nach mindestens einem der vorangehenden Ansprüche, wobei Ansteuereinheiten zur motorischen Zoomverstellung und zur motorischen Fokussierung des Mikroskopes benutzt werden.

## Claims

1. Stereomicroscope with an arrangement for direct control of the zoom drive of the stereomicroscope with at least two moveable lens groups (L1, L2), consisting of direct motorised drives (LA1, LA2) for the at least two moveable lens groups (L1, L2), wherein the drives (LA1, LA2) are controlled by a control unit (AE) which reads out pre-stored values for the movement of the lens members (L1, L2) and simultaneously controls the drives (LA1, LA2) in a corresponding manner in such a way that a different number of individual steps are covered per unit of time according to the mathematical curve.

2. Arrangement as claimed in at least one of the preceding claims, wherein lens members are provided as lens pairs in a Greenough stereomicroscope or telescopic stereomicroscope.

3. Arrangement as claimed in at least one of the preceding claims, wherein the drives are linear drives.

4. Arrangement as claimed in claim 4, wherein the linear drives are disposed in the stereomicroscope housing.

5. Arrangement as claimed in claim 5, wherein the drives are disposed between the lens pairs.

6. Arrangement as claimed in at least one of the preceding claims, wherein a plurality of moveable lens members are jointly controlled.

7. Arrangement as claimed in at least one of the preceding claims, wherein at least two lens members are separately driven.

8. Arrangement as claimed in at least one of the preceding claims, wherein during control of the zoom drive the respective set imaging scale is determined and displayed to the operator.

9. Arrangement as claimed in at least one of the preceding claims, wherein control units are used for motorised zoom adjustment and for motorised focussing of the microscope.

## Revendications

1. Stéréomicroscope avec un agencement pour la commande directe de l'entraînement de zoom du stéréomicroscope avec au moins deux groupes de lentilles mobiles (L1, L2), constitués d'entraînements moteurs directs (LA1, LA2) pour au moins deux groupes de lentilles mobiles précités (L1, L2),où les entraînements (LA1, LA2) sont commandés par une unité de commande (AE) qui lit des valeurs stockées préalablement pour le déplacement des éléments de lentille (L1, L2) et commande d'une manière correspondante les entraînements (LA1, LA2) en même temps de façon que par unité de temps, selon la courbe de commande mathématique, un nombre différent de pas individuels soit effectué.

2. Agencement selon la revendication précédente, où des éléments de lentille sont prévus comme paires de lentilles dans un stéréomicroscope de Greenough ou un stéréomicroscope télescopique.

3. Agencement selon au moins l'une des revendications précédentes, où les entraînements sont des entraînements linéaires.

4. Agencement selon la revendication 4, où les entraînements linéaires sont disposés dans le boîtier du stéréomicroscope.

5. Agencement selon la revendication 5, où les entraînements sont disposés entre les paires de lentilles.

6. Agencement selon au moins l'une des revendications précédentes, où a lieu une commande commune de plusieurs éléments de lentille mobiles.

7. Agencement selon au moins l'une des revendications précédentes, où a lieu un entraînement séparé d'au moins deux éléments de lentille.

8. Agencement selon au moins l'une des revendications précédentes, où pendant la commande de l'entraînement de zoom, l'échelle de représentation respectivement réglée est déterminée et est affichée pour l'opérateur.

9. Agencement selon au moins l'une des revendications précédentes, où sont utilisées des unités de commande pour le déplacement commandé par moteur du zoom et pour la focalisation commandée par moteur du microscope.
